# EUROPÄISCHE PATENTANMELDUNG

(11) **EP 4 647 244 A1**
(43) Veröffentlichungstag der Anmeldung: **12.11.2025**
(21) Anmeldenummer: 24174360.8
(22) Anmeldetag: 06.05.2024
(51) Int. Cl.: B29C 64/255, B22F 10/28, B22F 12/52, B22F 12/57, B22F 12/70, B22F 12/82, B29C 64/153, B29C 64/165, B29C 64/307, B29C 64/314, B29C 64/343, B33Y 10/00, B33Y 30/00, B33Y 40/00

(54) **BAUMATERIALBEHÄLTER, EIN HERSTELLUNGSVERFAHREN DAFÜR UND EIN AUFBEREITUNGSVERFAHREN FÜR BAUMATERIAL DAMIT**

(71) Anmelder: OSSBERGER GmbH + Co KG, 91781 Weißenburg (DE)
(72) Erfinder: GARSCHA, Markus, 91792 Ellingen (DE); OSSBERGER, Karl-Friedrich, 91781 Weissenburg (DE)
(74) Vertreter: HWP Intellectual Property

(57) **Zusammenfassung**

Ein Baumaterialbehälter (1), mit dem Baumaterial, insbesondere Pulver, in einer additiven Fertigung bereitstellbar ist und der die folgenden Merkmale aufweist: einen äußeren Druckbehälter (10) mit einem äußeren Boden, einer dem äußeren Boden gegenüberliegenden äußeren Decke und einem Boden und Decke verbindenden lateralen äußeren Schutzmantel, die ein äußeres Innenvolumen (18) einschließen, sodass das äußere Innenvolumen auf einem Druckniveau unterhalb eines Umgebungsdrucks, insbesondere Atmosphärendruck, außerhalb des äußeren Druckbehälters haltbar ist, einen innerhalb des äußeren Druckbehälters angeordneten inneren Aufnahmebehälter (30) mit einem inneren Aufnahmevolumen (38), in dem Baumaterial aufnehmbar und aufbereitbar ist und der aufweist: eine Baumaterialzufuhrleitung (46) für ein Gemisch aus Baumaterial und Luft auf Umgebungsdruck, insbesondere Atmosphärendruck, mit der Baumaterial dem inneren Aufnahmevolumen zuführbar ist, eine Unterdruckleitung (44), mit der im Vergleich zum Umgebungsdruck, insbesondere Atmosphärendruck, des äußeren Druckbehälters im inneren Aufnahmevolumen ein Unterdruck generierbar ist, sodass ein Druckgefälle zwischen dem inneren Aufnahmevolumen und der Baumaterialzufuhrleitung eine Zufuhr des Baumaterials in das Aufnahmevolumen unterstützt, eine steuerbare Luftzufuhrleitung (48), mit der Luft dem inneren Aufnahmevolumen beeinflussbar zuführbar ist, und eine Baumaterialabfuhrleitung (49), über die ein Baumaterial-Luft-Gemisch aus dem inneren Aufnahmevolumen mithilfe eines Unterdrucks im Vergleich zum Umgebungsdruck, insbesondere Atmosphärendruck, des äußeren Druckbehälters abführbar ist.

## Beschreibung

### 1. Gebiet der Erfindung

Die vorliegende Erfindung betrifft einen Baumaterialbehälter, mit dem Baumaterial, insbesondere Pulver, in einer additiven Fertigung bereitstellbar ist, ein Herstellungsverfahren dafür sowie ein Aufbereitungsverfahren für Baumaterial aus Kunststoff, insbesondere aus Polymer-Pulver oder Polymer-Granulat, zur additiven Fertigung mithilfe des Baumaterialbehälters.

### 2. Technischer Hintergrund der Erfindung

Im Stand der Technik sind verschiedene konstruktive Lösungen für einen Baumaterialbehälter bekannt. So beschreibt beispielsweise das europäische Patent EP 3 434 446 B1 einen Baumaterialbehälter für ein dreidimensionales Drucksystem, der aus einem Außengehäuse und einem inneren Behälter besteht. Der innere Behälter dient der Aufnahme des Baumaterials bzw. als Reservoir für das Baumaterial. Das Reservoir des Baumaterials weist gemäß einer ersten konstruktiven Alternative eine starre Form auf. Eine zweite Alternative sieht vor, dass die Wände des Reservoirs des Baumaterials aus einem flexiblen Material aufgebaut sind.

In das Innere des Reservoirs des Baumaterials reicht ein Saugkanal, dessen offenes Ende kurz vor dem unteren Boden des Reservoirs endet. Dieser Saugkanal ist mit einem Saugsystem verbunden, um mithilfe eines Unterdrucks Baumaterial aus dem Reservoir abzusaugen, also abzutransportieren, und dem additiven Fertigungsprozess zuzuführen.

Da sich in dem Baumaterial im Reservoir Makro- und Mikrokanälen bilden können, die beispielsweise als Rat Hole bezeichnet werden, wird die flexible Struktur des Reservoirs durch zyklische Druckbeanspruchung deformiert, um derartige Kanäle zu schließen.

Das europäische Patent EP 3 389 995 B1 beschreibt eine Verwaltungsstation für Baumaterial für die additive Fertigung. Diese Verwaltungsstation ist mit einem Zufuhrbehälter ausgestattet, um einen Fluidstrom des Bauteilmaterials aus dem Inneren des Zufuhrbehälters mit einem Sammeltank innerhalb des Materialverwaltungskörpers zu koppeln. Der Sammeltank wiederum weist einen Mengensensor zum Messen einer Gesamtmenge an Baumaterial innerhalb des Sammeltanks auf.

Dieser Mengensensor besteht beispielsweise aus einer oder mehreren Kraftmessdosen. Eine weitere Alternative besteht darin, einen derartigen Sensor laserbasiert oder mithilfe von Mikrowellen, Sonar oder mithilfe eines kapazitiven Sensors zu realisieren.

Derartige Sensoren werden auch als Füllstandsensoren bezeichnet. Jedoch ist in der technischen Lehre der EP 3 389 995 B1 nicht mehr ausgeführt, an welcher Stelle und in welcher Art und Weise derartige Sensoren angeordnet sein sollen.

Das europäische Patent EP 3 259 106 B1 offenbart ebenfalls einen Baumaterialcontainer für die additive Fertigstellung. In dem Behälter zur Aufnahme von Baumaterial ist zentral eine Absaugleitung angeordnet. Diese Absaugleitung endet in der Nähe des Bodens des Behälters zwischen konvergierenden Behälterwänden. Dieser zentrale Absaugkanal kann gemäß einer bevorzugten Ausgestaltung des beschriebenen Containers mit einem Luftkanal kombiniert sein, um ein Absaugen des Baumaterials aus dem Container zu unterstützen. Dieser zusätzliche Luftkanal, der parallel zum Absaugkanal angeordnet sein kann, hilft beispielsweise auch dabei, nahe dem Boden des Baumaterialbehälters Turbulenzen zu erzeugen, um das Absaugen des Materials zu unterstützen.

Ein weiteres Beispiel für einen Baumaterialbehälter mit einer zentralen Absaugleitung lässt sich dem europäischen Patent EP 3 487 684 B1 entnehmen. Auch hier ist eine zentrale Absaugleitung im Behälter angeordnet, die in der Nähe des Bodens des Behälters endet. Durch eine Luftzufuhr-öffnung wird Luft dem Pulverreservoir zugeführt, um das Absaugen des Baumaterials durch die zentrale Absaugleitung zu unterstützen.

In Bezug auf die bekannten Konstruktionen von Baumaterialbehältern ist es von Nachteil, dass eine Durchmischung von Baumaterial im Baumaterialbehälter nur mangelhaft möglich ist. Ein weiterer Nachteil besteht darin, dass die verarbeitete Baumaterialmenge sich in den bekannten Baumaterialbehältern kaum beurteilen lässt oder der technische Aufwand zur Beurteilung der Menge an Baumaterial hoch ist.

Es ist daher die Aufgabe vorliegender Erfindung, die Bereitstellung von Baumaterial für eine additive Fertigung mithilfe eines verbesserten Baumaterialbehälters effektiver zu gestalten.

### 3. Zusammenfassung der Erfindung

Die obige Aufgabe wird gelöst durch einen Baumaterialbehälter gemäß Patentanspruch 1, durch ein Aufbereitungsverfahren für Baumaterial mit diesem Baumaterialbehälter gemäß Patentanspruch 10 sowie durch ein Herstellungsverfahren des Baumaterialbehälters gemäß Patentanspruch 13. Vorteilhafte Ausführungsformen und Weiterentwicklungen vorliegender Erfindung ergeben sich aus der nachfolgenden Beschreibung, den Zeichnungen sowie den anhängenden Patentansprüchen.

Vorliegende Erfindung offenbart einen Baumaterialbehälter, mit dem Baumaterial, insbesondere Pulver oder Granulat, in einer additiven Fertigung bereitstellbar ist. Der Baumaterialbehälter weist die folgenden Merkmale auf: einen äußeren Druckbehälter mit einem äußeren Boden, einer dem äußeren Boden gegenüberliegenden äußeren Decke und einem Boden und Decke verbindenden lateralen äußeren Schutzmantel, die ein äußeres Innenvolumen einschließen, sodass das äu-ßere Innenvolumen auf einem Druckniveau unterhalb eines Umgebungsdrucks, insbesondere Atmosphärendrucks, außerhalb des äußeren Druckbehälters haltbar ist, einen innerhalb des äußeren Druckbehälters angeordneten inneren Aufnahmebehälter mit einem inneren Aufnahmevolumen, in dem Baumaterial aufnehmbar und aufbereitbar ist und der aufweist: b1. eine Baumaterialzufuhrleitung für ein Gemisch aus Baumaterial und Luft auf Umgebungsdruck, insbesondere Atmosphärendruck, mit der Baumaterial dem inneren Aufnahmevolumen zuführbar ist, b2. eine Unterdruckleitung, mit der im Vergleich zum Umgebungsdruck, insbesondere Atmosphärendruck, des äußeren Druckbehälters im inneren Aufnahmevolumen ein Unterdruck generierbar ist, sodass ein Druckgefälle zwischen dem inneren Aufnahmevolumen und der Baumaterialzufuhrleitung eine Zufuhr des Baumaterials in das Aufnahmevolumen unterstützt, b3. eine steuerbare Luftzufuhrleitung, mit der Luft dem inneren Aufnahmevolumen beeinflussbar zuführbar ist, und b4. eine Baumaterialabfuhrleitung, über die ein Baumaterial-Luft-Gemisch aus dem inneren Aufnahmevolumen mithilfe eines Unterdrucks oder eines Überdrucks im Vergleich zum Umgebungsdruck, insbesondere Atmosphärendruck, des äußeren Druckbehälters abführbar ist.

Der erfindungsgemäß bevorzugte Baumaterialbehälter zeichnet sich durch zwei ineinander geschachtelte Behälter aus, nämlich durch einen äußeren Druckbehälter und einen in diesem aufgenommenen inneren Aufnahmebehälter. Der innere Aufnahmebehälter dient als Reservoir für Baumaterial, welches vorzugsweise als Pulver aus Kunststoff vorliegt. Es ist ebenfalls bevorzugt, den Baumaterialbehälter an ein Baumaterial anzupassen, welches als Granulat aus Kunststoff vorliegt. Erfindungsgemäß bevorzugt sind der äußere Druckbehälter und der innere Aufnahmebehälter derart miteinander verbunden, dass sie auf einem annähernd gleichen Unterdruckniveau im Vergleich zur den äußeren Druckbehälter umgebenden Atmosphäre, also Umgebungs- bzw. Atmosphärendruck, gehalten werden können. Auf diese Weise bildet die Kombination aus äußerem Druckbehälter und innerem Aufnahmebehälter eine Drucksenke, welche die Zufuhr von Baumaterial in Pulverform oder in Granulatform unterstützt. Denn das zuzuführende Baumaterial wird durch die Drucksenke innerhalb der Behälterkombination angezogen, sodass das Pulver nicht das Bestreben aufweist, an die Umgebung auszuweichen. Damit ist der Vorteil verbunden, dass eine Staubentwicklung bei der Baumaterialverarbeitung und/oder dem Baumaterialtransport derart kontrollierbar ist, dass ein auftretender Baumaterialstaub weitestgehend im inneren Aufnahmebehälter gehalten wird.

Während eine Baumaterialzufuhrleitung zum inneren Aufnahmebehälter die nachfolgende Aufnahme des Baumaterials im inneren Aufnahmebehälter sicherstellt, sorgt eine Unterdruckleitung angeschlossen an den inneren Aufnahmebehälter für ein Druckniveau im inneren Aufnahmevolumen unterhalb des Umgebungsdrucks, insbesondere des Atmosphärendrucks, des Baumaterialbehälters. Erfindungsgemäß bevorzugt sind der innere Aufnahmebehälter und der äußere Druckbehälter und im Speziellen das Innere Aufnahmevolumen und das äußere Innenvolumen des äußeren Druckbehälters derart miteinander verbunden, dass ein Druckausgleich zwischen dem äußeren Innenvolumen und dem inneren Aufnahmevolumen erfolgen kann. Trotz des ermöglichten Druckausgleichs ist vermieden, dass ein Materialtransport aus dem inneren Aufnahmevolumen in das äußere Innenvolumen erfolgen kann. Vorzugsweise wird ein derartiger Druckausgleich über eine luftdurchlässige Membran zwischen dem inneren Aufnahmevolumen und dem äußeren Innenvolumen realisiert.

Mithilfe der steuerbaren Luftzufuhrleitung ist in kontrollierter Weise Luft von außerhalb des Baumaterialbehälters dem Baumaterial innerhalb des inneren Aufnahmevolumens zuführbar. Diese Luftzufuhr sorgt für eine bevorzugte Durchmischung der unter Unterdruck befindlichen Baumaterial-Luft-Mischung innerhalb des inneren Aufnahmevolumens. Eine Abfuhr des Baumaterials zur weiteren Verarbeitung aus dem inneren Aufnahmevolumen heraus wird vorzugsweise durch eine Baumaterialabfuhrleitung realisiert. An diese Baumaterialabfuhrleitung wird ein Unterdruck im Vergleich zum Umgebungsdruck, insbesondere Atmosphärendruck, angelegt, um die Baumaterial-Luft-Mischung aus dem inneren Aufnahmevolumen abzuführen.

Gemäß einer bevorzugten Ausführungsform vorliegender Erfindung weist der innere Aufnahmebehälter einen inneren Boden, eine dem gegenüberliegende innere Decke und eine geschlossen umlaufende und beide verbindende Seitenwand auf, an dessen innerem Boden ein rotationssymmetrisch aufgebautes Versorgungsventil angeordnet ist, über welches, vorzugsweise gleichmäßig verteilt im inneren Aufnahmevolumen, Luft dem inneren Aufnahmevolumen zuführbar und ein Pulver-Luft-Gemisch aus dem inneren Aufnahmevolumen abführbar ist.

Gemäß einer bevorzugten Ausführungsform vorliegender Erfindung lässt sich eine schematische Form des inneren Aufnahmebehälters als eine Zusammensetzung aus einem Zylinder oder Quader und einem sich daran anschließenden Kegelstumpf oder Pyramidenstumpf zusammenfassen. Aufgrund dieser schematischen Kombination läuft der innere Aufnahmebehälter an einem Boden sich in Längsrichtung verjüngend zu, sodass bevorzugte abgeschrägte Seitenwände im inneren Aufnahmevolumen enthaltenes Baumaterial dem Boden zuleiten. Diese bevorzugte Formgebung unterstützt die Wirkung des ebenfalls bevorzugten rotationssymmetrisch aufgebauten Versorgungsventils am inneren Boden des inneren Aufnahmebehälters.

Dieses rotationssymmetrisch aufgebaute Versorgungsventil dient einerseits der Zufuhr von Luft dem inneren Aufnahmevolumen, um in diesem eine Verwirbelungen und/oder Vermischung des Pulver-Luft-Gemischs zu unterstützen. Des Weiteren ist das rotationssymmetrisch aufgebaute Versorgungsventil mit der Baumaterialabfuhrleitung verbunden, um ein Baumaterial-Luft-Gemisch aus dem inneren Aufnahmevolumen mithilfe eines Unterdrucks aus dem Baumaterialbehälter abzuführen.

Durch die bevorzugte kegelstumpfartige oder pyramidenstumpfartige Form des inneren Aufnahmebehälters benachbart zum Boden des inneren Aufnahmebehälters sammelt sich angrenzend an das rotationssymmetrisch aufgebaute Versorgungsventil das Baumaterial, um von dort erneut durchmischt und/oder abgeführt zu werden.

Vorzugsweise sind die steuerbare Luftzufuhrleitung und die Baumaterialabfuhrleitung über eine zweikanalige Doppellanzenkonstruktion in Strömungsverbindung mit dem Versorgungsventil bereitgestellt.

Gemäß einer bevorzugten Ausführungsform vorliegender Erfindung ist das rotationssymmetrisch aufgebaute Versorgungsventil mit einer zumindest zweikanalig aufgebauten Doppellanzenkonstruktion verbunden. Die durch die Doppellanzenkonstruktion hergestellte Strömungsverbindung mit der Baumaterialabfuhrleitung und der steuerbaren Luftzufuhrleitung unterstützt die Realisierung unterschiedlicher Funktionen des Baumaterialbehälters. Durch eine gezielt zu- und abschaltbare und vorzugsweise in ihrer Luftmenge steuerbare Luftzufuhr durch die Luftzufuhrleitung wird Luft dem inneren Aufnahmebehälter zugeführt.

Diese Luft erzeugt Verwirbelungen in dem Baumaterial-Luft-Gemisch, welche zu einer Verteilung des Baumaterials im inneren Aufnahmevolumen beiträgt. Dies hat neben der gleichmäßigen Verteilung den Vorteil, dass vorhandene Bauteilagglomerate durch ihre Bewegung und damit vorzugsweise verbundene Zusammenstöße mit der Innenwand des Innenvolumens und anderen Bauteilagglomeraten zerstört oder zumindest zerkleinert werden.

Erfindungsgemäß bevorzugt ist die dem inneren Aufnahmevolumen zugeführte Luft derart konditioniert, dass sie die Vorbereitung des Bauteilmaterials für die nachfolgende additive Fertigung unterstützt. Im Speziellen bedeutet dies, dass die Luft mit einer bevorzugten Luftfeuchtigkeit und einer ebenfalls bevorzugten Temperatur und einem ebenfalls bevorzugten Druck oder einer Auswahl dieser Eigenschaften dem inneren Aufnahmevolumen zugeführt wird.

Um das Bauteilmaterial aus dem inneren Aufnahmevolumen abführen zu können, wird an die Baumaterialabfuhrleitung ein Unterdruck angelegt. Dieser Unterdruck führt dazu, dass das Baumaterial-Luft-Gemisch aus dem inneren Aufnahmevolumen abgesaugt wird. Das derart abgesaugte Baumaterial-Luft-Gemisch wird vorzugsweise einem Zyklon zugeleitet, um dort das Baumaterial aus dem Gemisch zu trennen.

Gemäß einer weiteren bevorzugten Ausführungsform des Baumaterialbehälters ist der innere Aufnahmebehälter an der äußeren Decke des äußeren Druckbehälters über eine Wiegekonstruktion befestigt, sodass eine Baumaterialbeladung des inneren Aufnahmebehälters bestimmbar ist.

Der erfindungsgemäß bevorzugte Baumaterialbehälter besteht aus dem äußeren Druckbehälter und dem innerhalb des äußeren Druckbehälters angeordneten inneren Aufnahmebehälter. Die Anordnung von Druckbehälter und Aufnahmebehälter ineinander ist derart, dass der Aufnahmebehälter innerhalb des Druckbehälters über eine bevorzugte Wiegekonstruktion aufgehangen ist. Das bedeutet, dass der innere Aufnahmebehälter abgesehen von der Verbindung zur äußeren Decke des äußeren Druckbehälters über die Wiegekonstruktion vorzugsweise frei bzw. kontaktlos innerhalb des äußeren Druckbehälters positioniert ist. Selbst wenn eine bevorzugte Strömungsverbindung von außen durch den äußeren Druckbehälter in das innere Aufnahmevolumen existiert, ist diese Strömungsverbindung bzw. sind diese Strömungsverbindungen derart konstruiert, dass sie eine vernachlässigbar geringe tragende Funktion des inneren Aufnahmebehälters innerhalb des äußeren Druckbehälter darstellen. Auf diese Art und Weise wird sichergestellt, dass ein Gewicht des inneren Aufnahmebehälters durch die Wiegekonstruktion erfasst wird.

Dies hat den Vorteil, dass sich eine zugeführte Baumaterialmenge innerhalb des inneren Aufnahmevolumens mit Hilfe der Wiegekonstruktion wiegen und damit in ihrer Masse bestimmen lässt. Mithilfe der Wiegekonstruktion ist es somit bevorzugt möglich, definierte Mengen von Baumaterial dem inneren Aufnahmevolumen zuzuführen und dort zu vermischen. In gleicher Weise ist es bevorzugt und möglich, definierte Mengen an Bauteilmaterial aus dem inneren Aufnahmevolumen abzuführen.

Vorzugsweise ist die Wiegekonstruktion eine 3-Punkt-Aufhängung des inneren Aufnahmebehälters an der äußeren Decke des äußeren Druckbehälters, in der jede oder zumindest eine Aufhängung mindestens einen Kraftsensor, vorzugsweise mindestens eine Kraftmessdose und/oder mindestens einen Dehnmessstreifen, aufweist, der in Abhängigkeit von einer Gewichtskraft der Baumaterialbeladung des Aufnahmebehälters ein auswertbares elektrisches Signal erzeugt.

Die bevorzugte Wiegekonstruktion bzw. die bevorzugte Aufhängung des inneren Aufnahmebehälters an der Decke des äußeren Druckbehälters mithilfe der bevorzugten Wiegekonstruktion hat zur Folge, dass der innere Aufnahmebehälter mit seiner Baumaterialbeladung vollständig an der bevorzugten Wiegekonstruktion hängt. Der in der Wiegekonstruktion eingesetzte mindestens eine Kraftsensor erfasst die durch das Baumaterial wirkende Gewichtskraft. Derartige Kraftsensoren sind im Stand der Technik bekannt. Sie werden vorzugsweise gebildet durch eine Kraftmessdose oder eine elastisch verformbare Konstruktion mit mindestens einem Dehnmessstreifen. Der Dehnmessstreifen erzeugt bevorzugt ein elektrisches Signal in Abhängigkeit von der Baumaterialbeladung des inneren Aufnahmevolumens. Auf diese Weise ist bevorzugt in situ bestimmbar, welche Baumaterialmenge in dem inneren Aufnahmevolumen des inneren Aufnahmebehälters vorhanden ist.

Gemäß einer bevorzugten Ausgestaltung vorliegender Erfindung in Kombination mit einer beliebigen Auswahl obiger Merkmale ist das innere Aufnahmevolumen des inneren Aufnahmebehälters mit dem äußeren Innenvolumen des äußeren Druckbehälters über eine Gasausgleichsmembran verbunden, um einen selbstständigen Druckausgleich zwischen dem inneren Aufnahmevolumen und dem äußeren Innenvolumen bereitzustellen.

Wie oben bereits erwähnt worden ist, liegen im inneren Aufnahmevolumen des Aufnahmebehälters sowie im äußeren Innenvolumen des äußeren Druckbehälters die gleichen Druckverhältnisse vor. Ein für diese Zwecke erforderlicher Druckausgleich zwischen dem inneren Aufnahmevolumen und dem äußeren Innenvolumen wird über eine Gasausgleichsmembran realisiert, die an Übergangsstellen zwischen dem inneren Aufnahmevolumen und dem äußeren Innenvolumen angeordnet ist. Diese bevorzugte Gasausgleichsmembran ermöglicht einen Gasstrom zwischen dem äußeren Innenvolumen und dem inneren Aufnahmevolumen. Gleichzeitig gewährleistet die Gasausgleichsmembran bevorzugt, dass aus dem inneren Aufnahmevolumen kein Baumaterial in das äußere Innenvolumen des Druckbehälters gelangt. Auf diese Weise ist gewährleistet, dass sich kein ungewogenes Baumaterial im äußeren Innenvolumen des Druckbehälters befindet.

Eine weitere bevorzugte Ausführungsform des Baumaterialbehälters sieht vor, dass die Baumaterialzufuhrleitung über einen ersten Zyklon mit dem inneren Aufnahmevolumen des inneren Aufnahmebehälters verbunden ist, sodass im Zyklon abgeschiedenes Pulver dem Aufnahmebehälter zuführbar ist. Weiter bevorzugt ist die Unterdruckleitung an den ersten Zyklon angeschlossen, sodass im Vergleich zum Umgebungsdruck, insbesondere Atmosphärendruck, des äußeren Druckbehälters ein Unterdruck im äußeren Innenvolumen des äußeren Druckbehälters und im inneren Aufnahmevolumen des inneren Aufnahmebehälters generierbar ist.

Gemäß einer bevorzugten Ausgestaltung vorliegender Erfindung wird ein Baumaterial-Luft-Gemisch zunächst einem ersten Zyklon zugeführt, um dort das Baumaterial aus dem Gemisch abzusondern. Das auf diese Weise abgesonderte Baumaterial fällt dann in das innere Aufnahmevolumen des inneren Aufnahmebehälters, um dort weiter für die additive Fertigung vorbereitet zu werden. Um innerhalb des inneren Aufnahmevolumens das oben angesprochene bevorzugte Unterdruckniveau im Vergleich zum Umgebungsdruck, insbesondere Atmosphärendruck, gewährleisten zu können, ist die Unterdruckleitung an den ersten Zyklon angeschlossen. Dieser Unterdruck ausgeübt durch die Unterdruckleitung setzt sich über den ersten Zyklon in den inneren Aufnahmebehälter fort.

Da vorzugsweise der innere Aufnahmebehälter über eine bevorzugte Gasausgleichsmembran mit dem äußeren Innenvolumen des umgebenden äußeren Druckbehälters verbunden ist, breitet sich das Unterdruckniveau von dem ersten Zyklon über den inneren Aufnahmebehälter in das äußere Innenvolumen des äußeren Druckbehälters aus. Auf diese Weise wird innerhalb des Baumaterialbehälters ein Unterdruckniveau erzeugt, welches unterhalb des Umgebungsdruck der Umgebung des Baumaterialbehälters liegt. Auf diese Weise wird gewährleistet, dass der Baumaterialbehälter eine Drucksenke bildet, die Baumaterial, vorzugsweise Kunststoff in Pulverform, anzieht bzw. ansaugt, sodass die Abgabe von Baumaterialstaub an die Umgebung des Baumaterialbehälters reduziert, vorzugsweise verhindert, wird.

Vorzugsweise ist die Baumaterialabfuhrleitung mit einem zweiten Zyklon verbunden, an den eine Unterdruckleitung angeschlossen ist. Unterdruckleitung bedeutet bevorzugt, dass ein Druckniveau unterhalb des Umgebungsdrucks, insbesondere des Atmosphärendrucks, innerhalb der Baumaterialabfuhrleitung vorliegt.

Gemäß einer weiteren bevorzugten Ausgestaltung vorliegender Erfindung ist die Baumaterialabfuhrleitung mit dem zweiten Zyklon verbunden, um auf diese Weise Baumaterial aus dem Baumaterial-Luft-Gemisch zu trennen. Denn nachdem das Baumaterial mit Luft innerhalb des inneren Aufnahmevolumens zur Vorbereitung des additiven Fertigungsverfahrens gemischt und oder konditioniert worden ist, wird es aus dem Aufnahmebehälter abgeführt.

Da eine additive Fertigung, egal ob sie bevorzugt mit Kunststoff-Pulver oder mit Kunststoff-Granulat arbeitet, das Baumaterial verarbeitet, ohne dass es in einem Baumaterial-Luft-Gemisch vorliegt, muss nach Abfuhr des Gemisches aus dem inneren Aufnahmevolumen eine Abtrennung des Baumaterials mit dem zweiten Zyklon erfolgen. Sobald das Baumaterial aus dem Baumaterial-Luft-Gemisch abgetrennt worden ist, liegt es bevorzugt in einer verarbeitbaren Form vor.

Vorliegende Erfindung offenbart zudem ein Aufbereitungsverfahren für Baumaterial aus Kunststoff zur additiven Fertigung mithilfe eines Baumaterialbehälters gemäß mindestens einer der oben beschriebenen Ausgestaltungen und Merkmalskombinationen. Das Aufbereitungsverfahren weist die folgenden Schritte auf: Erzeugen eines Unterdrucks im inneren Aufnahmevolumen des inneren Aufnahmebehälters im Vergleich zum Umgebungsdruck, insbesondere Atmosphärendruck, des äußeren Druckbehälters, mit Hilfe des Unterdrucks Zuführen eines Pulver-Luft-Gemischs in das innere Aufnahmevolumen des inneren Aufnahmebehälters, danach Zuführen von Luft in das innere Aufnahmevolumen und Verwirbeln des im inneren Aufnahmevolumen enthaltene Pulver-Luft-Gemisch und Anlegen eines Unterdrucks oder eines Überdrucks im Vergleich zum Umgebungsdruck, insbesondere Atmosphärendruck, an die Baumaterialabfuhrleitung und Abführen des Pulver-Luft-Gemischs aus dem inneren Aufnahmevolumen.

Vorzugsweise erfolgt in einem weiteren Schritt: Wiegen des dem inneren Aufnahmevolumen zugeführten Materials unter Unterdruck im Vergleich zum Umgebungsdruck, insbesondere Atmosphärendruck.

Gemäß einer bevorzugten Ausführungsform vorliegender Erfindung weist die zugeführte Luft eine definierte Luftfeuchtigkeit und vorzugsweise Temperatur auf, um die Aufbereitung des Pulvers oder Granulats in dem Gemisch mit Luft zu unterstützen.

Vorliegende Erfindung offenbart zudem ein Herstellungsverfahren für einen Baumaterialbehälter, mit dem Baumaterial, insbesondere Pulver oder Granulat, in einer additiven Fertigung bereitstellbar ist. Das Herstellungsverfahren weist die folgenden Merkmale auf: Bereitstellen eines äußeren Druckbehälter mit einem äußeren Boden, einer dem äußeren Boden gegenüberliegenden äußeren Decke und einem Boden und Decke verbindenden lateralen äußeren Schutzmantel, die ein äußeres Innenvolumen einschließen, sodass das äußere Innenvolumen auf einem Druckniveau unterhalb eines Umgebungsdrucks, insbesondere Atmosphärendrucks, außerhalb des äußeren Druckbehälters haltbar ist, innerhalb des äußeren Druckbehälters Anordnen eines inneren Aufnahmebehälter mit einem inneren Aufnahmevolumen, in dem Baumaterial aufnehmbar und aufbereitbar ist und in dem weiterhin bereitgestellt werden: eine Baumaterialzufuhrleitung für ein Gemisch aus Baumaterial und Luft auf Umgebungsdruck, mit der Baumaterial dem inneren Aufnahmevolumen zuführbar ist, eine Unterdruckleitung im Vergleich zum Umgebungsdruck, mit der im Vergleich zum Umgebungsdruck des äußeren Druckbehälters im inneren Aufnahmevolumen ein Unterdruck generierbar ist, sodass ein Druckgefälle zwischen dem inneren Aufnahmevolumen und der Baumaterialzufuhrleitung eine Zufuhr des Baumaterials in das Aufnahmevolumen unterstützt, eine steuerbare Luftzufuhrleitung, mit der Luft dem inneren Aufnahmevolumen beeinflussbar zuführbar ist, und eine Baumaterialabfuhrleitung, über die ein Baumaterial-Luft-Gemisch aus dem inneren Aufnahmevolumen mithilfe eines Unterdrucks oder eines Überdrucks im Vergleich zum Umgebungsdruck, insbesondere Atmosphärendruck, abführbar ist.

Des Weiteren ist in dem Herstellungsverfahren folgender weiterer Schritt bevorzugt: Befestigen des inneren Aufnahmebehälter an der äußeren Decke des äußeren Druckbehälters über eine Wiegekonstruktion, sodass eine Baumaterialbeladung des inneren Aufnahmebehälters bestimmbar ist, wobei vorzugsweise dessen Wiegekonstruktion eine 3-Punkt-Aufhängung des inneren Aufnahmebehälters an der äußeren Decke des äußeren Druckbehälters ist, in der jede Aufhängung mindestens einen Dehnmessstreifen aufweist, der in Abhängigkeit von einer Gewichtskraft der Baumaterialbeladung des Aufnahmebehälters ein auswertbares elektrisches Signal erzeugt.

Gemäß einer weiteren bevorzugten Ausführungsform des erfindungsgemäßen Herstellungsverfahrens ist folgender Schritt vorgesehen: Bereitstellen des inneren Aufnahmebehälters mit einem inneren Boden, einer dem gegenüberliegenden inneren Decke und einem geschlossen umlaufenden und beide verbindende Seitenwand, an dessen innerem Boden ein rotationssymmetrisch aufgebautes Versorgungsventil angeordnet ist, über welches, vorzugsweise gleichmäßig verteilt im inneren Aufnahmevolumen, Luft dem inneren Aufnahmevolumen zuführbar und ein Pulver-Luft-Gemisch aus dem inneren Aufnahmevolumen abführbar ist, wobei vorzugsweise die steuerbare Luftzufuhrleitung und die Baumaterialabfuhrleitung über eine zweikanalige Doppellanzenkonstruktion in Strömungsverbindung mit dem Versorgungsventil bereitgestellt werden.

### 4. Kurzzusammenfassung der Zeichnungen

Nachfolgend wird die vorliegende Erfindung unter Bezugnahme auf die Zeichnungen detailliert beschrieben. Die Zeichnungen zeigen bevorzugte Ausführungsformen vorliegender Erfindung, ohne auf diese beschränkt zu sein. Gleiche Bezugszeichen in den Zeichnungen bezeichnen dabei gleiche Bauteile und/oder Elemente. Es zeigen:
- Figur 1: eine seitliche Schnittansicht einer bevorzugten Ausführungsform des Baumaterialbehälters in Kombination mit einem ersten und einem zweiten Zyklon zur Materialzu- und -abfuhr,
- Figur 2: eine vergrößerte Schnittdarstellung eines bevorzugten Bodens des Aufnahmebehälters mit einem Versorgungsventil in einem bevorzugten Betriebszustand,
- Figur 3: eine vergrößerte Schnittdarstellung des bevorzugten Bodens des Aufnahmebehälters mit dem Versorgungsventil in einem weiteren bevorzugten Betriebszustand,
- Figur 4: eine Draufsicht auf eine bevorzugte Ausführungsform des Versorgungsventils am Boden des Aufnahmebehälters,
- Figur 5: eine bevorzugte Ausführungsform einer Aufhängung einer Wiegekonstruktion des Aufnahmebehälters an einem äußeren Deckel des äußeren Druckbehälters,
- Figur 6: eine seitliche Schnittdarstellung einer bevorzugten Verbindung zwischen zwei Rohren,
- Figur 7: ein Flussdiagramm einer bevorzugten Ausführungsform eines Aufbereitungsverfahrens für Baumaterial einer additiven Fertigung und

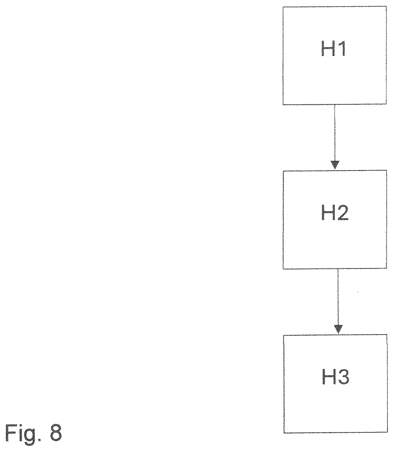

- Figur 8: ein Flussdiagramm einer bevorzugten Ausführungsform eines Herstellungsverfahrens des Baumaterialbehälters.

### 5. Detaillierte Beschreibung der bevorzugten Ausführungsformen

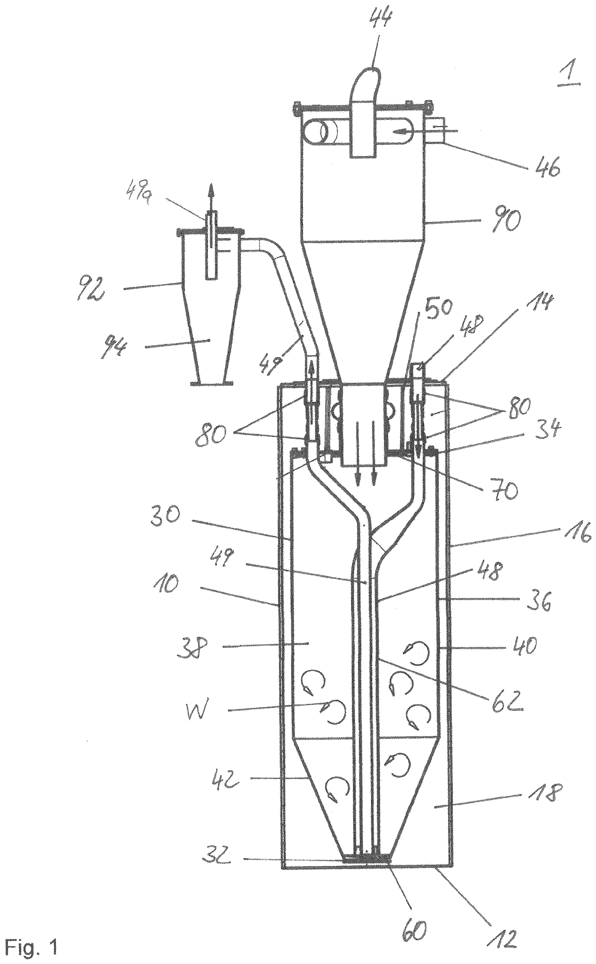

Figur 1 zeigt eine schematische Darstellung einer bevorzugten Ausführungsform des erfindungsgemäßen Baumaterialbehälters 1. Dieser besteht aus einem äußeren Druckbehälter 10 und einem inneren Aufnahmebehälter 30.

Der äußere Druckbehälter 10 hat einen äußeren Boden 12, eine dem äußeren Boden 12 in axialer Richtung des Druckbehälters 10 gegenüber angeordnete Decke 14 und einen umlaufend angeordneten Schutzmantel 16. Der umfänglich umlaufende laterale Schutzmantel 16 verbindet die Decke 14 und den Boden 12, um einen geschlossenen Raum im Inneren 18 des Druckbehälters 10 zu bilden.

Der äußere Druckbehälter 10 realisiert in seinem Inneren 18 einen gegen die Umgebung des Druckbehälters 10 abgeschirmten Druckraum, um den inneren Aufnahmebehälter 30 darin geschützt oder abgeschirmt aufzunehmen. Das Innere 18 gewährleistet, dass sich ein Umgebungsdruck, eine Luftfeuchtigkeit und eine Lufttemperatur der Umgebungsluft bzw. der den Druckbehälter 10 umgebenden Atmosphäre nicht unkontrolliert im Inneren 18 des Druckbehälters 10 und im Aufnahmebehälter 30 ausbreitet. Aufgrund dieser Konstruktion ist es möglich, eine konditionierte Behälteratmosphäre im Druckbehälter 10 und im Aufnahmebehälter 30 im Unterschied zur Umgehungsatmosphäre des Bauteilbehälters 1 vorzugeben und zu realisieren.

Innerhalb des äußeren Druckbehälters 10 ist der innere Aufnahmebehälter 30 angeordnet. Gemäß unterschiedlicher bevorzugter Ausführungsformen vorliegender Erfindung ist der innere Aufnahmebehälter 30 im Inneren 18 des äußeren Druckbehälters 10 befestigt. Gemäß einer bevorzugten Ausgestaltung vorliegender Erfindung ist der innere Aufnahmebehälter 30 an mindestens einer der umgebenden Seiten Decke 12, Boden 14 und/oder umlaufender Schutzmantel 16 befestigt. Gemäß einer weiteren bevorzugten Ausführungsform vorliegender Erfindung ist der innere Aufnahmebehälter 30 innerhalb des äußeren Druckbehälters 10 aufgehangen.

Gemäß einer zudem bevorzugten Ausgestaltung vorliegender Erfindung ist der innere Aufnahmebehälter 30 über eine Wiegekonstruktion 50 (siehe unten), vorzugsweise eine Drei-Punkt-Aufhängung, an einer dem Inneren 18 zugewandten Seite der äußeren Decke 14 aufgehangen und damit befestigt. Diese bevorzugte Ausführungsform vorliegender Erfindung ist unten näher erläutert.

Der innere Aufnahmebehälter 30 besteht aus einer inneren Decke 34, die vorzugsweise gegenüber der äußeren Decke 14 angeordnet ist. Seitlich, vorzugsweise radial außen, ist der innere Aufnahmebehälter 30 durch eine umlaufende, geschlossene Seitenwand 36 begrenzt. Der inneren Decke 34 gegenüberliegend schließt ein innerer Boden 32 einen Innenraum 38 des Aufnahmebehälters 30 ab. Die geschlossen umlaufende Seitenwand 36 verbindet dazu die innere Decke 34 mit dem inneren Boden 32.

Der äußere Druckbehälter 10 hat vorzugsweise die Form eines Zylinders mit kreisförmiger Decke 14 und kreisförmigem Boden 12, um einen ausreichend großen inneren Raum für den Aufnahmebehälter 30 zu bilden. Es ist in gleicher Weise bevorzugt, den Druckbehälter 10 als Quader oder als beliebig geformten Hohlkörper vorzusehen.

Der innere Aufnahmebehälter 30 besteht in seiner Form bevorzugt aus einem zylindrischen 40 und einem kegelstumpfartigen Teil 42. Der zylindrische Teil 40 ist der äußeren Decke 14 zugewandt, während sich der kegelstumpfartige Teil 42 in Richtung Boden 12 verjüngt.

In gleicher Weise ist es bevorzugt, den Aufnahmebehälter 30 aus einem quaderförmigen und einem pyramidenstumpfähnlichen Teil aufzubauen. Diese sind analog zur Kombination der Teile 40, 42 anzuordnen.

Die bevorzugte Form des Druckbehälters 10 stellt ein ausreichend großes inneres Aufnahmevolumen für die innere Anordnung des Aufnahmebehälters 30 bereit.

Der Aufnahmebehälter 30 dient dazu, Baumaterial aus Kunststoff, vorzugsweise aus Polymer, für eine additive Fertigung, vorzugsweise in Pulverform oder als Granulat, aufzunehmen und vorzubereiten. Die bevorzugte Kombination von Quader und Pyramidenstumpf oder Zylinder und Kegelstumpf in einer sich verjüngenden Form in Schwerkraftrichtung unterstützt eine Entnahme des Baumaterials am Boden 32, da sich dort das Baumaterial im sich verjüngenden Teil des Aufnahmebehälters 30 sammelt.

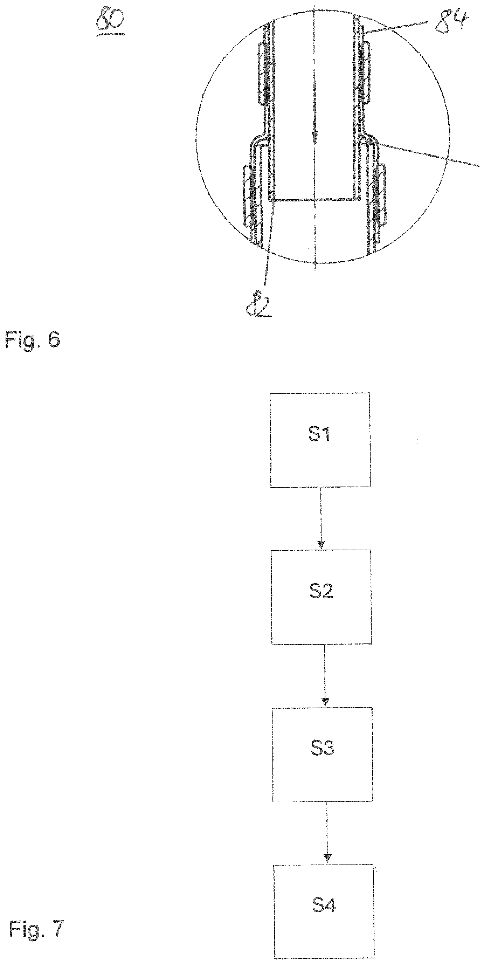

Der Aufnahmebehälter 30 ist mit einer Unterdruckleitung 44 verbunden. Der an der Unterdruckleitung 44 anliegende Druck liegt unterhalb des Umgebungsdrucks, insbesondere des Atmosphärendrucks, des Baumaterialbehälters 1. Dieser Unterdruck der Unterdruckleitung 44 erzeugt im Inneren 38 des Aufnahmebehälters 30 ein Unterdruckniveau, sodass das Innere 38 eine Drucksenke im Vergleich zur Umgebung des Bauteilbehälters 1 bildet. (Schritt S1, siehe Figur 7) Vorzugsweise ist der Unterdruck der Unterdruckleitung 44 derart eingestellt, dass der Unterdruck in einem Bereich von 10 hPa bis 250 hPa, insbesondere 15 hPa bis 190 hPa, unterhalb des Umgebungsdrucks der den Bauteilbehälter 1 umgebenden Atmosphäre liegt.

Die Unterdruckleitung 44 mündet zunächst in das Innere 18 des Druckbehälters 10 und setzt sich von dort fort bis in das Innere 38 des Aufnahmebehälters 30.

Gemäß einer bevorzugten Ausführungsform vorliegender Erfindung ist eine Verbindung zwischen dem äußeren Innenvolumen 18 und dem Inneren 38 des Aufnahmebehälters 30 mit einer gasdurchlässigen Membran 70 realisiert (siehe Figur 6). Die gasdurchlässige Membran 70 verhindert bevorzugt einen Transport von Baumaterial zwischen dem äußeren Innenvolumen 18 und dem Inneren 38 des Aufnahmebehälters 30. Gleichzeitig ermöglicht die gasdurchlässige Membran 70 einen Druckausgleich zwischen dem äußeren Innenvolumen 18 und dem Inneren 38 des Aufnahmebehälters 30. Somit bilden basierend auf der Membran 70 bevorzugt das Innere 38 und das äußere Innenvolumen 18 eine gemeinsame Drucksenke oder allgemein einen Raum auf gleichem Druckniveau.

Das Innere 38 des Aufnahmebehälters 30, welches auch als Aufnahmevolumen zur Aufnahme des Baumaterials bezeichnet wird, ist zudem mit einer Baumaterialzufuhrleitung 46 verbunden. Über die Baumaterialzufuhrleitung 46 wird ein Gemisch aus Baumaterial und Luft auf Umgebungsdruck der Umgebung des Druckbehälters 10, vorzugsweise Atmosphärendruck, dem Aufnahmevolumen 38 zugeführt. Wenn die Baumaterialzufuhrleitung 46 in das Druckmilieu des Aufnahmevolumens 38 mündet, wird das über die Baumaterialzufuhrleitung 46 zugeführte Baumaterial-Luft-Gemisch von dem Unterdruck bzw. der Drucksenke im Aufnahmevolumen 38 angezogen und in das Aufnahmevolumen 38 transportiert. Damit wird bevorzugt auch Baumaterialstaub von der Drucksenke im Aufnahmevolumen 38 angezogen, wodurch eine Abgabe von Baumaterialstaub an die Umgebung des Baumaterialbehälters 1 vermindert oder vermieden wird. (Schritt S2, siehe Figur 7)

Gemäß einer bevorzugten Ausführungsform vorliegender Erfindung münden die Unterdruckleitung 44 und die Baumaterial-Zufuhrleitung 46 über einen ersten Zyklon 90 in den Aufnahmebehälter 30. Der erste Zyklon 90 trennt in bekannter Weise das Baumaterial aus dem Baumaterial-Luft-Gemisch und führt es mithilfe der wirkenden Schwerkraft und bevorzugt unterstützt durch den wirkenden Unterdruck im Aufnahmevolumen und im ersten Zyklon 90 dem Aufnahmevolumen 38 zu.

Es ist ebenfalls bevorzugt, das Baumaterial ohne den ersten Zyklon 90 dem Aufnahmevolumen 38 zuzuführen.

Nachdem das Baumaterial, insbesondere ein Polymer oder ein Polymergemisch, in Pulverform oder als Granulat dem Aufnahmevolumen 38 zugeführt worden ist, wird es im Aufnahmevolumen 38 mit Luft verwirbelt oder vermischt. Dazu wird eine über eine steuerbare Luft-Zufuhrleitung 48 Luft dem Aufnahmevolumen 38 zugeführt. Die zugeführte Luft sorgt für eine Verwirbelung des Gemischs aus Baumaterial und Luft im Aufnahmevolumen 38. (Schritt S4, siehe Figur 7)

Vorzugsweise ist die Luftzufuhr über die steuerbare Luftzufuhrleitung 48 gezielt zu- und abschaltbar und in einem Durchlassstrom der Luft veränderbar. Durch eine gezielte Veränderung des Zustroms von Luft zum Aufnahmevolumen 38 ist die Luftzufuhrleitung 48 steuerbar. Die Veränderung des Zustroms von Luft unterstützt eine Durchmischung und Vorbereitung des Baumaterials für die spätere additive Fertigung.

Zudem ist es bevorzugt, die Luft vor einer Zufuhr zum Aufnahmevolumen 38 zu konditionieren. Eine gezielte eingestellte Luftfeuchtigkeit, ein gezielt eingestellter Luftdruck im Vergleich zum Atmosphärendruck und eine gezielt eingestellte Lufttemperatur oder eine Auswahl davon unterstützen eine Aufbereitung des Baumaterials. In diesem Zusammenhang wird vorzugsweise für PA12 (Polyamid 12) entsprechend der Herstellerangabe eine Lufttemperatur von 23 °C mit einer relativen Luftfeuchtigkeit von 50 % genutzt. Eine Konditionierung und Bereitstellung der Luft erfolgt bevorzugt mit einer bekannten Klimaanlage. Diese ist in ihrem Luftförder- und Luftkonditionierungsvolumen bevorzugt an den Baumaterialbehälter 1 und sein Verarbeitungsvolumen und Luftbedarf angepasst.

Während der Pulver- oder Granulatverarbeitung oder -aufbereitung wird Luftfeuchtigkeit an das Pulver oder Granulat abgegeben, sodass die Luftfeuchtigkeit der konditionierten Luft sinkt. Daher ist es erfindungsgemäß bevorzugt, die Luft im Baumaterialbehälter 1 fortlaufend auzutauschen, um die konditionierten Parameter oder eine Auswahl davon der dem Baumaterialbehälter zugeführten Luft aufrechterhalten zu können.

Nach einer Aufbereitung des Baumaterials im Aufnahmevolumen 38 (Schritt S4) wird das Baumaterial-Luft-Gemisch über eine Baumaterialabfuhrleitung 49 aus dem Aufnahmevolumen 38 abgeführt, vorzugsweise abgesaugt oder ausgeblasen. Dazu wird an die Baumaterialabfuhrleitung 49 bevorzugt ein Unterdruck im Vergleich zum Umgebungsdruck, insbesondere Atmosphärendruck, angelegt (Schritt S5), der größer ist als der im Aufnahmevolumen 38 wirkende Unterdruck. Es ist ebenfalls bevorzugt, die Unterdruckleitung 44 in das Aufnahmevolumen 38 abzuschalten und die Luftzufuhrleitung 48 zur Umgebung des Baumaterialbehälters 1 zu öffnen. Damit wird bevorzugt das Aufnahmevolumen 38 auf Umgebungsdruck gesetzt, um das Absaugen zu erleichtern.

Abhängig von Pulver- oder Granulatkonditionierung ist es bevorzugt, an der Baumaterialabfuhrleitung 49 einen Unterdruck einzustellen oder anzulegen, der 0 bar bis 0,4 bar, vorzugsweise in einem Bereich zwischen 10 mbar und 250 mbar, unterhalb des Drucks im Aufnahmeraum 38 liegt.

Gemäß einer weiteren bevorzugten Ausgestaltung von Schritt S5 wird an die steuerbare Luftzufuhrleitung 48 ein Überdruck der Luft im Vergleich zum Umgebungsdruck, insbesondere Atmosphärendruck, angelegt. Gleichzeitig sind die Leitungen 44 und 46 geschlossen. Damit ist das Aufnahmevolumen 38 geschlossen.

Nachfolgend wird das Aufnahmevolumen 38 über die Baumaterialabfuhrleitung 49 gegen die Umgebung geöffnet, also Anlegen von Umgebungsdruck an die Baumaterialabfuhrleitung 49. Durch den Luftüberdruck an der Luftzufuhrleitung 48 wird das Baumaterial-Luft-Gemisch über die Baumaterialabfuhrleitung 49 aus dem Aufnahmevolumen 38 ausgeblasen und in einem passenden Behälter aufgefangen.

Im Vergleich zu einer Baumaterialabfuhr mittels Unterdruck in der Baumaterialabfuhrleitung 49 kann mittels Luftüberdruck in einen konstruktiv beliebig aufgebauten Behälter ausgeblasen werden. Denn der ausgeblasene Luftüberdruck beeinträchtigt nicht eine ausreichende Formstabilität des Material aufnehmenden Behälters.

Wird hingegen Material mittels Unterdruck in den Behälter abgeführt, muss der Behälter so stabil konstruiert sein, dass der Unterdruck den Behälter nicht zusammenzieht, also formstabil ist und bleibt.

Gemäß einer bevorzugten Ausführungsform vorliegender Erfindung mündet die Baumaterialabfuhrleitung 49 in einen zweiten Zyklon 92, um dort Baumaterial und Luft voneinander zu trennen. In dieser Ausgestaltung ist es bevorzugt, den Unterdruck über die Baumaterialabfuhrleitung 49A anzulegen oder den Überdruck der Luft aus 48 über 49a abzuleiten. (Schritt S6).

Am inneren Boden 32 des Aufnahmebehälters 30 ist bevorzugt ein rotationssymmetrisch aufgebautes Versorgungsventil 60 angeordnet. Das Versorgungsventil 60 ist vorzugsweise mit der steuerbaren Luftzufuhrleitung 48 und mit der Baumaterialabfuhrleitung 49 verbunden, wozu die Luftzufuhrleitung 48 und die Baumaterialabfuhrleitung 49 in einer bevorzugten Doppellanze 62 kombiniert sind. In der bevorzugten Doppellanze 62 verläuft die Baumaterialabfuhrleitung 49 im axialen Zentrum der Doppellanze 62. Umgeben ist die Baumaterialabfuhrleitung 49 bevorzugt von der Luftzufuhrleitung 48. Diese Konstruktion ist in den Figuren 1-3 erkennbar. Man sieht, dass die Doppellanze 62 aus zwei ineinander geschachtelten Kanälen gebildet durch die Luftzufuhrleitung 48 und die Baumaterialabfuhrleitung 49 besteht.

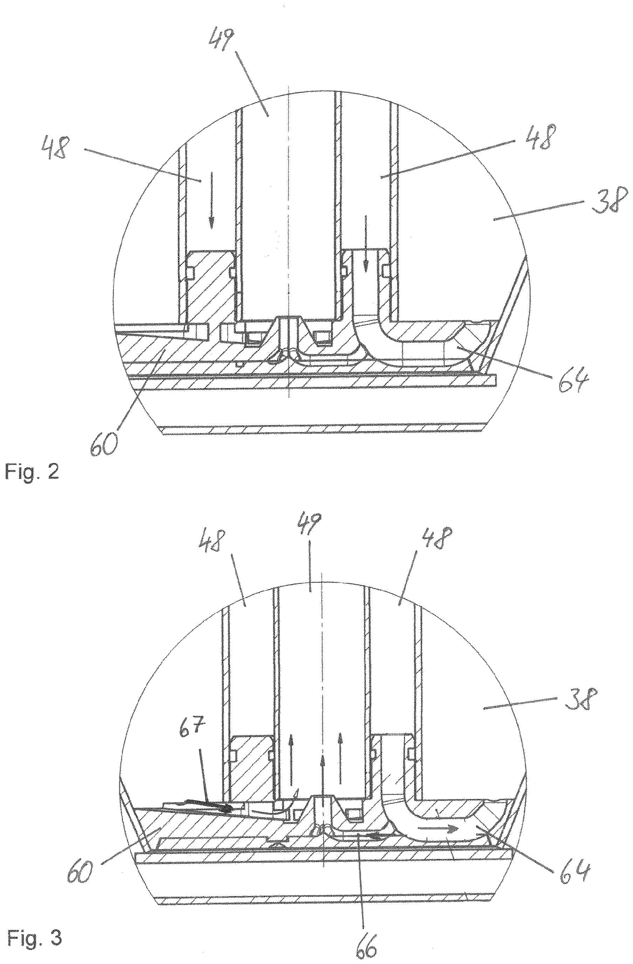

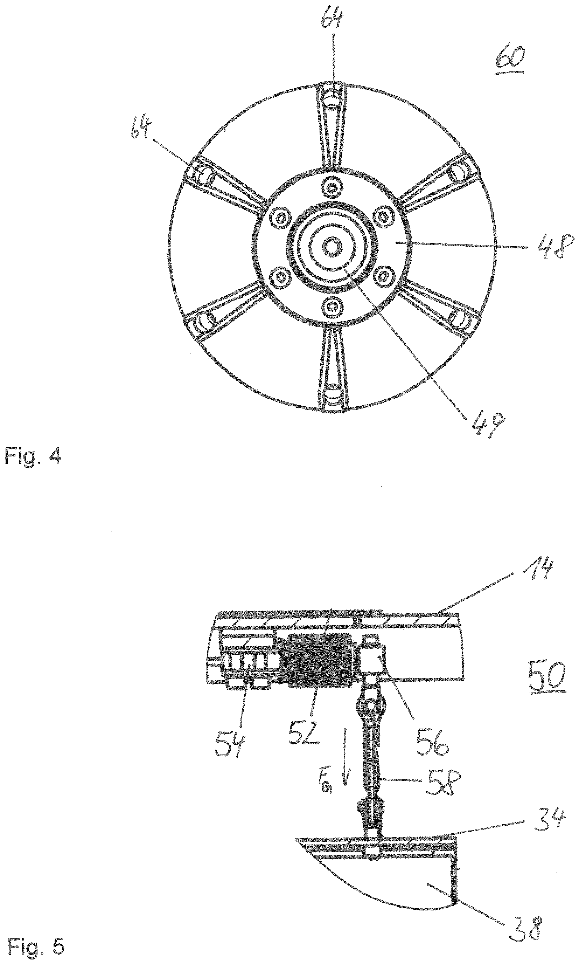

Die Luftzufuhrleitung 48 und die Baumaterialabfuhrleitung 49 sind mit dem Versorgungsventil 60 verbunden. Dieses ist in einer Draufsicht in Figur 4 und in den Schnittansichten der Figuren 2 und 3 erkennbar. Entsprechend strömt Luft oder ein Baumaterial-Luft-Gemisch über die Doppellanze 62 und das Versorgungsventil 60.

In der Doppellanze 62 umgibt bevorzugt die Luftzufuhrleitung 48 die zentral angeordnete Baumaterialabfuhrleitung 49. Wird bevorzugt konditionierte Luft über die Luftzufuhrleitung 48 eingeblasen, gelangt sie über die radial auswärts verlaufenden Kanäle 64 in das Aufnahmevolumen 38. Da das Versorgungsventil 60 rotationssymmetrisch aufgebaut ist, wird die konditionierte Luft gleichmäßig verteilt in das Aufnahmevolumen 38 über die Kanäle 64 eingeblasen. Dadurch werden vorzugsweise Verwirbelungen W im Baumaterial-Luft-Gemisch im Aufnahmevolumen 38 erzeugt, die das Baumaterial aufbereiten und bevorzugt eine Abgabe von Luftfeuchtigkeit an das Pulver oder Granulat unterstützt.

Die entsprechende Luftzufuhr über die Luftzufuhrleitung 48 und die Kanäle 64 ist in Figur 2 durch entsprechende Pfeile in Leitung 48 und Kanal 64 angedeutet. Figur 1 deutet die bevorzugten Verwirbelungen W im Baumaterial-Luft-Gemisch an.

Gemäß einer bevorzugten Ausführungsform vorliegender Erfindung wird an der Unterdruckleitung 44 ein Unterdruck angelegt, der sich in das Aufnahmevolumen 38 ausbreitet. Gleichzeitig wird über die Luftzufuhrleitung 48 und die Kanäle 64 bevorzugt konditionierte Luft dem Aufnahmevolumen 38 zugeführt. Das Baumaterial wird im Aufnahmevolumen 38 vermischt, was die Verwirbelungen W andeutet (siehe Figur 2 und 1).

Durch die bevorzugte Zufuhr der konditionierten Luft über die Luftzufuhrleitung 48 kommt das Baumaterial in Pulverform mit der Luft in Kontakt. Dadurch kann vorzugsweise eine vorhandene Luftfeuchtigkeit in das pulverförmige Baumaterial, vorzugsweise untersättigtes Pulver, diffundieren.

Die über die Luftzufuhrleitung 48 zugeführte Luft ist bevorzugt keine Druckluft, die über einen Kompressor vorbereitet und abgekühlt worden ist. Vielmehr wird die Luftzufuhr über den Unterdruck an der Unterdruckleitung 44 realisiert. Dadurch wird der Nachteil vermieden, dass zugeführte Druckluft Ölreste aus dem Kompressor in das Baumaterial einträgt, die die Temperatur des Baumaterial-Luft-Gemischs abgesenkt oder eventuell zusätzlich Energie durch einen Befeuchter der zuzuführenden Luft verbraucht wird. Zudem wird durch die Vermeidung von Druckluft eine Verklumpung des Baumaterials reduziert.

Um Kunststoff-Baumaterial in Pulverform oder Granulat abzutransportieren, wird vorzugsweise der Unterdruck von der Unterdruckleitung 44 abgeschaltet und Leitung 46 geschlossen. Dann wird Unterdruck im Vergleich zum Atmosphärendruck an der Baumaterialabfuhrleitung 49 oder 49a angelegt. Eine Luftzufuhr unter Atmosphärendruck ist bevorzugt über die Luftzufuhrleitung 48 zugeschaltet.

Der Unterdruck der Baumaterialabfuhrleitung 49 oder 49a erzeugt am Ende der Doppellanze 62 im sich verjüngenden Bereich des Aufnahmevolumens 38 eine Ausförderströmung für Baumaterial, das sich im verjüngten Bereich gesammelt hat. Dazu breitet sich der Unterdruck aus der Baumaterialabfuhrleitung 49 oder 49a über einen Ausförderkanal 66 und die Kanäle 64 in das Aufnahmevolumen 38 aus. Das Aufnahmevolumen 38 bzw. der Aufnahmeraum 38 ist aufgrund der bevorzugt geschlossenen Leitungen 44, 46 abgeschlossen und nur über die steuerbare Luftzufuhrleitung 48 gegen Atmosphäre oder konditionierte Umgebungsluft geöffnet. Der bevorzugte Unterdruck liegt an der Baumaterialabfuhrleitung 49 oder 49a an. Ein Luftausgleich am Versorgungsventil 60 findet über den Kanal 66 statt.

Der wirkende Unterdruck saugt an oder reißt Baumaterial mit über die Kanäle 64, 66 und 67 in die Baumaterialabfuhrleitung 49 oder in den zweiten Zyklon 92 über die Baumaterialabfuhrleitung 49a. Im zweiten Zyklon 92 wird das Baumaterial abgeschieden und in einem Behälter 94 gesammelt.

Der innere Aufnahmebehälter 30 ist über die Wiegeeinrichtung 50 an der Decke 14 befestigt, im Speziellen aufgehangen. Diese Konstruktion veranschaulichen die Figuren 1 und 5, während Figur 5 eine Vergrößerung der Wiegevorrichtung 50 darstellt.

Die Wiegevorrichtung 50 erfasst bevorzugt eine Masse von Baumaterial, die dem Aufnahmebehälter 30 zugeführt worden ist, um dort aufbereitet zu werden. Zudem erfasst die Wiegevorrichtung 50 bevorzugt eine Masse von Baumaterial, die aus dem Aufnahmebehälter 30 abgeführt worden ist, da sich entsprechend das Gewicht des Aufnahmebehälters 30 verringert.

Die Wiegevorrichtung 50 besteht vorzugsweise aus einer 3-Punkt-Aufhängung des Aufnahmebehälters 30 an der Decke 14. Es ist ebenfalls bevorzugt, mehr oder weniger als drei Aufhängungen zu nutzen.

Für jede Aufhängung wird vorzugsweise ein belastungsabhängig verformbares Element in Form eines Kraftsensors, vorzugsweise eine Kraftmessdose oder ein elastisch verformbares Element in Kombination mit mindestens einem Dehnmessstreifen verwendet. Das verformbare Element ist vorzugsweise ein Biegebalken 52 oder eine S-förmige Aufhängung (nicht gezeigt) oder eine ringförmige Aufhängung (nicht gezeigt) oder eine andere Konstruktion eines Kraftsensors, um bekannte Beispiele zu nennen.

Der bevorzugte Biegebalken 52 ist mit einem Befestigungsende 54 an einem axialen Ende an der Decke 14 befestigt. An einem freien axialen Ende 56 des Biegebalkens 52 ist eine Verbindung 58 zur inneren Deckel 34 schwenkbar befestigt. Ändert sich eine Beladung des Aufnahmebehälters 30 mit Baumaterial, dann ändert sich die Stärke einer Gewichtskraft F_{G} des Aufnahmebehälters 30, die auf das freie Ende 56 des Biegebalkens 52 wirkt. Die wirkende Gewichtskraft F_{G} des Aufnahmebehälters 30 biegt den Biegebalken 52 in Abhängigkeit von ihrer Stärke durch.

Vorzugsweise ist ein Dehnmessstreifen (nicht gezeigt) in axialer Richtung auf dem Biegebalken 52 befestigt und elektrisch angeschlossen. Der Dehnmessstreifen folgt der belastungsabhängigen Biegung bzw. Verformung des Biegebalkens 52 und erzeugt ein entsprechendes elektrisches Signal. Das elektrische Signal ist auf eine mechanische Beladung des Aufnahmebehälters 30 kalibrierbar, sodass aus dem elektrischen Signal des Dehnmessstreifens eine Beladung des Aufnahmebehälters 30 mit Baumaterial ableitbar ist. Dieses elektrische Signal wird durch eine bekannte Auswerteeinheit verarbeitet. (Schritt S3)

Somit ist es bevorzugt, bei einer Zufuhr oder Abfuhr von Baumaterial aus dem Aufnahmebehälter 30 das durch den Dehnmessstreifen erzeugte elektrische Signal zu erfassen und auszuwerten. Entsprechend der erfassten Beladung oder Entladung des Aufnahmebehälters 30 über das elektrische Signal des Dehnmessstreifen wird die Be- oder Entladung fortgesetzt oder beendet.

Um die bevorzugte Erfassung der Baumaterialbeladung des Aufnahmebehälters 30 weniger zu beeinflussen, sind vorzugsweise die Luftzufuhrleitung 48, die Baumaterialzufuhrleitung 46 und die Baumaterialabfuhrleitung 49 oder eine Auswahl davon mit einem mechanisch entkoppelnden Verbindungsstück 80 mit dem Aufnahmebehälter 30 verbunden. Wie in Figur 6 schematisch gezeigt ist, wird das Verbindungsstück 80 durch zwei ineinandergreifende Rohrenden 82, 84 unterschiedlichen Durchmessers gebildet. Aufgrund der unterschiedlichen Durchmesser der Rohrenden 82, 84 ist ein Luft-Ring-Spalt zwischen den ineinander geführten und überlappenden Rohrenden 82, 84 vorhanden. Der Luft-Ring-Spalt sorgt bevorzugt für Bewegungsfreiheit zwischen den Rohrenden 82, 84 ohne Reibung oder mit reduzierter Reibung.

Der Luft-Ring-Spalt zwischen den Rohrenden 82, 84 ist durch eine bevorzugte Elastomerdichtung 86 abgedichtet. Sollte zwischen den Rohrenden 82, 84 eine Druckdifferenz herrschen, wird sie bevorzugt durch die Elastomerdichtung 86 ausgeglichen, ohne die obige Beladungsmessung zu verfälschen.

### 6. Bezugszeichenliste

- 1: Baumaterialbehälter
- 10: äußerer Druckbehälter
- 12: Boden
- 14: Decke
- 16: Schutzmantel
- 18: Innere des Druckbehälters
- 30: innerer Aufnahmebehälter
- 32: innerer Boden
- 34: innere Decke
- 36: Seitenwand
- 38: Innere des Aufnahmebehälters, Aufnahmevolumen
- 40: zylindrischer oder quaderförmig Teil
- 42: kegelförmiger oder kegelstumpfähnlicher Teil
- 44: Unterdruckleitung
- 46: Baumaterialzufuhrleitung
- 48: steuerbare Luftzufuhrleistung
- 49; 49a: Baumaterialabfuhrleitung
- 50: Wiegekonstruktion
- 60: Versorgungsventil
- 62: Doppellanze
- 64: Kanäle
- 66; 67: Ausförderkanal
- 70: gasdurchlässige Membran
- 80: mechanisch entkoppelndes Verbindungstück
- 82, 84: Rohrenden
- 90: erster Zyklon
- 92: zweiter Zyklon
- 94: Sammelbehältern
- W: Verwirbelung

## Patentansprüche

1. Ein Baumaterialbehälter (1), mit dem Baumaterial, insbesondere Pulver, in einer additiven Fertigung bereitstellbar ist und der die folgenden Merkmale aufweist:
a. einen äußeren Druckbehälter (10) mit einem äußeren Boden (12), einer dem äußeren Boden (12) gegenüberliegenden äußeren Decke (14) und einem Boden (12) und Decke (14) verbindenden lateralen äußeren Schutzmantel (16), die ein äußeres Innenvolumen (18) einschließen, sodass das äußere Innenvolumen (18) auf einem Druckniveau unterhalb eines Umgebungsdrucks, insbesondere Atmosphärendrucks, außerhalb des äußeren Druckbehälters (10) haltbar ist,
b. einen innerhalb des äußeren Druckbehälters (10) angeordneten inneren Aufnahmebehälter (30) mit einem inneren Aufnahmevolumen (38), in dem Baumaterial aufnehmbar und aufbereitbar ist und der aufweist:
b1. eine Baumaterialzufuhrleitung (46) für ein Gemisch aus Baumaterial und Luft auf Umgebungsdruck, insbesondere Atmosphärendruck, mit der Baumaterial dem inneren Aufnahmevolumen (38) zuführbar ist,
b2. eine Unterdruckleitung (44), mit der im Vergleich zum Umgebungsdruck, insbesondere Atmosphärendruck, des äußeren Druckbehälters (10) im inneren Aufnahmevolumen (38) ein Unterdruck generierbar ist, sodass ein Druckgefälle zwischen dem inneren Aufnahmevolumen (38) und der Baumaterialzufuhrleitung (46) eine Zufuhr des Baumaterials in das Aufnahmevolumen (38) unterstützt,
b3. eine steuerbare Luftzufuhrleitung (48), mit der Luft dem inneren Aufnahmevolumen (38) beeinflussbar zuführbar ist, und
b4. eine Baumaterialabfuhrleitung (49; 49a), über die ein Baumaterial-Luft-Gemisch aus dem inneren Aufnahmevolumen (38) mithilfe eines Unterdrucks oder eines Überdrucks im Vergleich zum Umgebungsdruck, insbesondere Atmosphärendruck, des äußeren Druckbehälters (10) abführbar ist.

2. Der Baumaterialbehälter (1) gemäß Patentanspruch 1, in dem der innere Aufnahmebehälter (30) einen inneren Boden (32), eine dem gegenüberliegende innere Decke (34) und eine geschlossen umlaufende und beide verbindende Seitenwand (36) aufweist, an dessen innerem Boden (32) ein rotationssymmetrisch aufgebautes Versorgungsventil (60) angeordnet ist, über welches, vorzugsweise gleichmäßig verteilt im inneren Aufnahmevolumen (38), Luft dem inneren Aufnahmevolumen (38) zuführbar und ein Pulver-Luft-Gemisch aus dem inneren Aufnahmevolumen (38) abführbar ist.

3. Der Baumaterialbehälter (1) gemäß Patentanspruch 2, in dem die steuerbare Luftzufuhrleitung (48) und die Baumaterialabfuhrleitung (49) über eine zweikanalige Doppellanzenkonstruktion (62) in Strömungsverbindung mit dem Versorgungsventil (60) bereitgestellt sind.

4. Der Baumaterialbehälter (1) gemäß mindestens einem der vorhergehenden Patentansprüche, in dem der innere Aufnahmebehälter (30) an der äußeren Decke (14) des äußeren Druckbehälters (10) über eine Wiegekonstruktion (50) befestigt ist, sodass eine Baumaterialbeladung des inneren Aufnahmebehälters (30) bestimmbar ist.

5. Der Baumaterialbehälter (1) gemäß Patentanspruch 4, dessen Wiegekonstruktion (50) eine 3-Punkt-Aufhängung des inneren Aufnahmebehälters (30) an der äußeren Decke (14) des äußeren Druckbehälters (10) ist, in der jede Aufhängung (52, 58) mindestens einen Kraftsensor, vorzugsweise mindestens eine Kraftmessdose und/oder mindestens einen Dehnmessstreifen, aufweist, der in Abhängigkeit von einer Gewichtskraft F_{G} der Baumaterialbeladung des Aufnahmebehälters (30) ein auswertbares elektrisches Signal erzeugt.

6. Der Baumaterialbehälter (1) gemäß mindestens einem der vorhergehenden Patentansprüche, in dem das innere Aufnahmevolumen (38) des inneren Aufnahmebehälters (30) mit dem äu-ßeren Innenvolumen (18) des äußeren Druckbehälters (10) über eine Gasausgleichsmembran (70) verbunden ist, um einen selbstständigen Druckausgleich zwischen dem inneren Aufnahmevolumen (38) und dem äußeren Innenvolumen (18) bereitzustellen.

7. Der Baumaterialbehälter (1) gemäß mindestens einem der vorhergehenden Patentansprüche, in dem die Baumaterialzufuhrleitung (46) über einen ersten Zyklon (90) mit dem inneren Aufnahmevolumen (38) des inneren Aufnahmebehälters (30) verbunden ist, sodass im Zyklon (90) abgeschiedenes Pulver dem Aufnahmebehälter (30) zuführbar ist.

8. Der Baumaterialbehälter (1) gemäß Patentanspruch 7, in dem die Unterdruckleitung (44) an den ersten Zyklon (90) angeschlossen ist, sodass im Vergleich zum Umgebungsdruck, insbesondere Atmosphärendruck, des äußeren Druckbehälters (10) ein Unterdruck im äußeren Innenvolumen (18) des äußeren Druckbehälters (10) und im inneren Aufnahmevolumen (38) des inneren Aufnahmebehälters (30) generierbar ist.

9. Der Baumaterialbehälter (1) gemäß einem der vorhergehenden Patentansprüche, in dem die Baumaterialabfuhrleitung (49) mit einem zweiten Zyklon (92) verbunden ist, an den eine Unterdruckleitung (49A) angeschlossen ist.

10. Ein Aufbereitungsverfahren für Baumaterial aus Kunststoff, vorzugsweise ein Polymer, zur additiven Fertigung mithilfe eines Baumaterialbehälters (1) gemäß mindestens einem der vorhergehenden Patentansprüche, welches die folgenden Schritte aufweist:
a. Erzeugen (S1) eines Unterdrucks im inneren Aufnahmevolumen (38) des inneren Aufnahmebehälters (30) im Vergleich zum Umgebungsdruck, insbesondere Atmosphärendruck, des äußeren Druckbehälters (10),
b. mit Hilfe des Unterdrucks Zuführen (S2) eines Pulver-Luft-Gemischs in das innere Aufnahmevolumen (38) des inneren Aufnahmebehälters (30),
c. danach Zuführen von Luft (S4) in das innere Aufnahmevolumen (38) und Verwirbeln des im inneren Aufnahmevolumen (38) enthaltene Pulver-Luft-Gemisch und
d. Anlegen (S5) eines Unterdrucks oder eines Überdrucks im Vergleich zum Umgebungsdruck, insbesondere Atmosphärendruck, an die Baumaterialabfuhrleitung (49; 49a) im Vergleich zum Aufnahmevolumen (38) und Abführen (S6) des Pulver-Luft-Gemischs aus dem inneren Aufnahmevolumen (38).

11. Das Aufbereitungsverfahren gemäß Patentanspruch 10 mit dem weiteren Schritt: Wiegen (S3) des dem inneren Aufnahmevolumen (38) zugeführten Materials unter Unterdruck im Vergleich zum Umgebungsdruck, insbesondere Atmosphärendruck.

12. Das Aufbereitungsverfahren gemäß Patentanspruch 10 oder 11, wobei die zugeführte Luft eine definierte Luftfeuchtigkeit und vorzugsweise Temperatur aufweist, um die Aufbereitung des Pulvers zu unterstützen.

13. Ein Herstellungsverfahren für einen Baumaterialbehälter (1), mit dem Baumaterial, insbesondere Pulver oder Granulat aus Kunststoff, in einer additiven Fertigung bereitstellbar ist, das die folgenden Merkmale aufweist:
a. Bereitstellen (H1) eines äußeren Druckbehälters (10) mit einem äußeren Boden (12), einer dem äußeren Boden (12) gegenüberliegenden äußeren Decke (14) und einem Boden (12) und Decke (14) verbindenden lateralen äußeren Schutzmantel (16), die ein äußeres Innenvolumen (18) einschließen, sodass das äußere Innenvolumen (18) auf einem Druckniveau unterhalb eines Umgebungsdrucks, insbesondere Atmosphärendruck, außerhalb des äußeren Druckbehälters (10) haltbar ist,
b. innerhalb des äußeren Druckbehälters (10) Anordnen (H2) eines inneren Aufnahmebehälters (30) mit einem inneren Aufnahmevolumen (38), in dem Baumaterial aufnehmbar und aufbereitbar ist und in dem weiterhin bereitgestellt werden:
b1. eine Baumaterialzufuhrleitung (46) für ein Gemisch aus Baumaterial und Luft auf Umgebungsdruck, mit der Baumaterial dem inneren Aufnahmevolumen (38) zuführbar ist,
b2. eine Unterdruckleitung (44), mit der im Vergleich zum Umgebungsdruck des äu-ßeren Druckbehälters (10) im inneren Aufnahmevolumen (38) ein Unterdruck generierbar ist, sodass ein Druckgefälle zwischen dem inneren Aufnahmevolumen (38) und der Baumaterialzufuhrleitung (46) eine Zufuhr des Baumaterials in das Aufnahmevolumen (38) unterstützt,
b3. eine steuerbare Luftzufuhrleitung (48), mit der Luft dem inneren Aufnahmevolumen (38) beeinflussbar zuführbar ist, und
b4. eine Baumaterialabfuhrleitung (49; 49a), über die ein Baumaterial-Luft-Gemisch aus dem inneren Aufnahmevolumen (38) mithilfe eines Unterdrucks oder eines Überdrucks im Vergleich zum Umgebungsdruck, insbesondere Atmosphärendruck, abführbar ist.

14. Das Herstellungsverfahren gemäß Patentanspruch 13 mit dem weiteren Schritt:
Befestigen (H3) des inneren Aufnahmebehälters (30) an der äußeren Decke (14) des äußeren Druckbehälters (10) über eine Wiegekonstruktion (50), sodass eine Baumaterialbeladung des inneren Aufnahmebehälters (30) bestimmbar ist, wobei vorzugsweise dessen Wiegekonstruktion (50) eine 3-Punkt-Aufhängung des inneren Aufnahmebehälters (30) an der äußeren Decke (14) des äußeren Druckbehälters (10) ist, in der jede Aufhängung mindestens einen Dehnmessstreifen aufweist, der in Abhängigkeit von einer Gewichtskraft der Baumaterialbeladung des Aufnahmebehälters (30) ein auswertbares elektrisches Signal erzeugt.

15. Das Herstellungsverfahren gemäß Patentanspruch 13 oder 14 mit dem weiteren Schritt:
Bereitstellen des inneren Aufnahmebehälters (30) mit einem inneren Boden (32), einer dem gegenüberliegenden inneren Decke (34) und einem geschlossen umlaufenden und beide verbindende Seitenwand (36), an dessen innerem Boden (32) ein rotationssymmetrisch aufgebautes Versorgungsventil (60) angeordnet ist, über welches, vorzugsweise gleichmäßig verteilt im inneren Aufnahmevolumen (38), Luft dem inneren Aufnahmevolumen (38) zuführbar und ein Pulver-Luft-Gemisch aus dem inneren Aufnahmevolumen (38) abführbar ist, wobei vorzugsweise die steuerbare Luftzufuhrleitung (48) und die Baumaterialabfuhrleitung (49; 49a) über eine zweikanalige Doppellanzenkonstruktion (62) in Strömungsverbindung mit dem Versorgungsventil (60) bereitgestellt werden.
